# EUROPEAN PATENT SPECIFICATION

(11) **EP 3 827 639 B1**
(45) Date of publication and mention of the grant of the patent: **01.01.2025**
(21) Application number: 19880108.6
(22) Date of filing: 01.11.2019
(51) Int. Cl.: H04B 7/155, H04W 28/16, H04W 76/22, H04L 41/0806, H04W 76/15, H04W 84/04, H04W 88/08

(54) **METHODS FOR TRANSMITTING CONTROL SIGNALING IN RELAY NETWORK, INTERGRATED ACCESS AND BACKHAUL NODE AND CENTRAL UNIT**
VERFAHREN ZUR ÜBERTRAGUNG VON STEUERUNGSSIGNALISIERUNG IN EINEM RELAISNETZWERK, INTEGRIERTER ZUGANGS- UND BACKHAUL-KNOTEN, UND ZENTRALEINHEIT
PROCÉDÉS DE TRANSMISSION DE SIGNALISATION DE COMMANDE DANS UN RÉSEAU RELAIS, NOEUD D'ACCÈS ET DE RACCORDEMENT INTÉGRÉS, ET UNITÉ CENTRALE

(30) Priority: 02.11.2018 CN 201811303678; 14.08.2019 CN 201910748988
(43) Date of publication of application: 02.06.2021
(60) Divisional application: 24215618.0
(73) Proprietor: Samsung Electronics Co., Ltd., Suwon-si, Gyeonggi-do 16677 (KR)
(72) Inventor: WANG, Weiwei, Beijing 100028 (CN); XU, Lixiang, Beijing 100028 (CN); WANG, Hong, Beijing 100028 (CN)
(74) Representative: Gulde & Partner
(86) International application number: PCT/KR2019/014759
(87) International publication number: WO 2020/091533

(56) References cited:
- KR-A- 20120 035 932
- US-A1- 2017 005 913
- ERICSSON: "Transfer of L1-L2 configuration", vol. RAN WG3, no. Reno, Nevada, USA; 20171127 - 20171201, 18 November 2017 (2017-11-18), XP051373511, Retrieved from the Internet <URL:http://www.3gpp.org/ftp/tsg%5Fran/WG3%5FIu/TSGR3%5F98/Docs/> [retrieved on 20171118]
- HUAWEI ET AL: "Bearer mapping for control plane signaling in BH", vol. RAN WG2, no. Gothenburg, Sweden; 20180820 - 20180824, 10 August 2018 (2018-08-10), XP051522407, Retrieved from the Internet <URL:http://www.3gpp.org/ftp/tsg%5Fran/WG2%5FRL2/TSGR2%5F103/Docs/R2%2D1812819%2Ezip> [retrieved on 20180810]
- HUAWEI ET AL: "Distributed RRC functions for IAB", 3GPP DRAFT; R2-1815505, 28 September 2018 (2018-09-28), Chengdu, China, pages 1 - 7, XP051524826
- ANONYMOUS: "3rd Generation Partnership Project; Technical Specification Group Radio Access Network; Study on Integrated Access and Backhaul; (Release 15)", 3GPP STANDARD; TECHNICAL REPORT; 3GPP TR 38.874, no. V0.6.0, 1 November 2018 (2018-11-01), pages 1 - 90, XP051487730
- CATT: "Control Plane Considerations for L2 IAB Architectures", 3GPP DRAFT; R2-1809819, 22 June 2018 (2018-06-22), Montreal, Canada, XP051525655

## Description

### Technical Field

The present application relates to the technical field of wireless communications, and particularly to a method performed by a first IAB node, a method performed by a central unit, an IAB node and a central unit.

### Background Art

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post Disclosure of InventionLTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier(FBMC), non-orthogonal multiple access(NOMA), and sparse code multiple access (SCMA) as an advanced access technology have been developed.

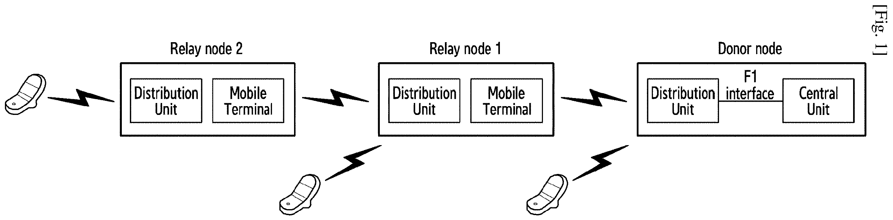

In a New Radio (NR) Access network or in the 5^{th} generation (5G) network, an Integrated Access and Backhaul (IAB) topic is proposed, in order to extend the coverage of the network. The main purpose of the topic is to build a multi-hop network architecture, as shown in Fig. 1. A network architecture containing a donor node and two relay nodes is shown in Fig. 1, among which all users ultimately communicate with the donor node.

In this architecture, the donor node is a base station composed of a central unit (CU) and a distribution unit (DU), and the central unit and the distribution unit communicate via an F1 interface. The central unit has at least a Radio Resource Control (RRC) protocol layer and a Packet Data Convergence Protocol (PDCP) protocol layer, etc., and may also contain a Service Data Adaptation Protocol (SDAP) protocol layer. The distribution unit has a Radio Link Control (RLC) protocol layer, a Medium Access Control (MAC) protocol layer, and a physical layer, etc. There is a standardized public interface F1 between CU and DU. The F1 interface is divided into a control plane F1-C and a user plane F1-U. The transport network layer of F1-C performs transmissions based on IP. In order to transmit signaling more reliably, an SCTP protocol is added on top of IP, and the protocol of the application layer of F1-C is F1AP. SCTP can provide reliable application layer message transmissions. The transport layer of F1-U is UDP/IP. GTP-U is on top of UDP/IP and is used to carry a Protocol Data Unit (PDU) of the user plane.

Each of the relay nodes in the IAB network architecture consists of two parts: a distribution unit (DU) portion and a mobile terminal (MT) portion. The distribution unit portion includes only part of a protocol stack, such as the Radio Link Control (RLC), the Medium Access Control (MAC), and the physical layer, etc. The mobile terminal portion includes a complete protocol stack, such as the control plane including RRC/PDCP/RLC/MAC/PHY, and the user plane including SDAP/PDCP/RLC/MAC/PHY. The mobile terminal portion can act as a user to access network. A user can access the network through any one of the relay nodes, and can also through the donor node.

In the conventional technology, the control signaling in the network is only transferred inside the donor node, that is, it is transferred between the central unit CU and the distribution unit DU via the F1 interface. Therefore, although the IAB network architecture extends the relay nodes in the network, transmissions of the control signaling between the relay nodes have not been considered while designing the network in the prior art. Therefore, a solution that enables transmissions of the control signaling in the IAB network is required, such that the problems mentioned above can be at least partially addressed.

ERICSSON: "Transfer of L1-L2 configuration", 3GPP DRAFT; R3-174785 TRANSFER OF L1-L2 CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE vol. RAN WG3, no. Reno, Nevada, USA; 20171127 - 20171201 18 November 2017 (2017-11-18), XP051373511 is concerned with generating a L1-L2 configuration for a UE and exchanging it over a F1 interface.

HUAWEI ET AL: "Bearer mapping for control plane signaling in BH", 3GPP DRAFT; R2-1812819 BEARER MAPPING FOR CONTROL PLANE SIGNALING IN BH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX vol. RAN WG2, no. Gothenburg, Sweden; 20180820 - 20180824 10 August 2018 (2018-08-10), XP051522407 is concerned with bearer mapping for control plane signaling in BH.

### Disclosure of Invention

### Solution to Problem

In order to solve at least some of the above problems, the embodiments of the present application provide a method performed by a first IAB node for a DU in a communication system, a method performed by a CU of a donor node in a communication system, a first IAB noode and a CU for use in a donor node in a communication system as set out in the appended set of claims..

### Brief Description of Drawings

The above and other objects, features, and advantages of the present application will become apparent from the following descriptions on embodiments of the present application with reference to the drawings, in which:
Fig. 1 illustrates a schematic diagram of an example network architecture of the relay network;
Fig. 2 illustrates a schematic diagram of transmissions of control signaling in the relay network;
Figs. 3A and 3B illustrate schematic diagrams of Backhaul Link channels;
Fig. 4 illustrates a flow chart of a method for transmitting the control signaling in the relay network according to an embodiment of the present application;
Figs. 5A to 5D respectively illustrates a schematic diagram of the method for transmitting the control signaling in the relay network according to an embodiment of the present application;
Fig. 6 illustrates a schematic diagram of entities involved in a configuration method used for transmissions of control signaling in the relay network according to an embodiment of the present application;
Fig. 7 illustrates a flow chart of a configuration method used for transmissions of control signaling in the relay network according to an embodiment of the present application;
Fig. 8 illustrates a flow chart of a configuration method used for transmissions of control signaling in the relay network according to another embodiment of the present application; and
Fig. 9 schematically illustrates block diagram of a device according to an embodiment of the present application.

In the drawings, all same or similar arrangements are designated with same or similar reference numerals.

### Best Mode for Carrying out the Invention

The following description with reference to the accompanying drawings is provided to assist in a comprehensive understanding of various embodiments of the present disclosure as defined by the claims. It includes various specific details to assist in that understanding, but these are to be regarded as merely exemplary. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

In order to make the objects, technical solutions and advantages of the present application more clear, detailed descriptions will be further made below with reference to the accompanying drawings. In the following detailed description, numerous specific details are set forth to provide a thorough understanding of the present application and claimed subject matter. However, it will be apparent to those ordinary ones skilled in the art that the present application and claimed subject matter may be practiced without these specific details. In other instances, well-known methods, procedures, components, materials and/or circuits have not been described in detail to avoid confusion.

Throughout the specification, references to "one embodiment", "an embodiment", "one example" or "an example" mean: particular features, structures, or characteristics described in connection with embodiments or examples are included in at least one embodiment of the present disclosure. Therefore, phrases such as "in one embodiment", "in an embodiment", "one example" or "an example" appearing throughout the specification do not necessarily refer to the one and the same embodiment or example. In addition, the particular features, structures, or characteristics may be combined in one or more embodiments or examples in any suitable combination and/or sub-combination. In addition, it should be understood by those ordinary ones skilled in the art, the drawings are provided for the purpose of illustration, and the drawings are not necessarily to scale. The term "and/or" used herein includes any and all combinations of one or more of the associated listed items.

The expression "configured to" as used in various embodiments of the present disclosure may be interchangeably used with, for example, "suitable for", "having the capacity to", "designed to", "adapted to", "made to", or "capable of" in terms of hardware or software, according to circumstances. Alternatively, in some situations, the expression "device configured to" may mean that the device, together with other devices or components, "is able to". For example, the phrase "processor adapted (or configured) to perform A, B, and C" may mean a dedicated processor (e.g., embedded processor) only for performing the corresponding operations or a generic-purpose processor (e.g., central processing unit (CPU) or application processor (AP)) that can perform the corresponding operations by executing one or more software programs stored in a memory device.

The present disclosure relates to an apparatus and a method for an integrated access and backhaul (IAB) network. More specifically, the present disclosure describes control signaling for the IAB network comprising at least one of IAB donor node, IAB node, central unit (CU), distributed unit (DU), and so on.

The terms referring to control information used in the following description (e.g., a control signal, F1-C, control plane, control data, control signaling), the terms for signals (e.g., a signal, message, a packet data unit (PDU), a service data unit (SDU), the terms referring to data (e.g., information, value), the terms referring to network entities (e.g., a cell or a SGNB, gNB, CU, DU, mobile termination (MT)), the terms referring to sending operations (e.g., request, response, report or transfer), and the terms referring to elements of the device are employed for convenience of description. Therefore, the present disclosure is not limited by the terms described below, and other terms having equivalent technical meanings may be used.

Although the present disclosure describes various embodiments based on the terms used in some communication standards (e.g., long-term evolution (LTE) and LTE-advanced (LTE-A) systems or new radio (NR) systems in 3^{rd} generation partnership Project (3GPP)), they are only examples for the description. Various embodiments of the present disclosure may be easily modified and applied to other communication systems.

In the present invention, a message name is only an example, and other message names will not be excluded.

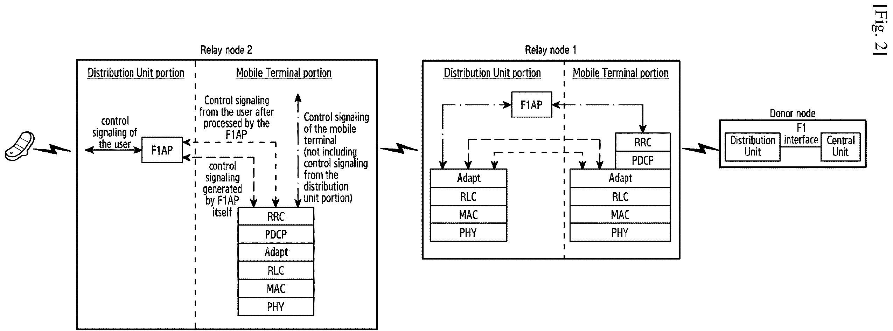

A method for transmitting control signaling according to an embodiment of the present application can enable transmissions of control signaling between relay nodes in an IAB network, which will be described below with references to FIG. 2. According to various embodiments, the relay node can be referred as 'IAB node'.

Fig. 2 illustrates a schematic diagram in which the control signaling is processed inside a relay node and is transmitted between a relay node and a donor node, in the IAB network according to an embodiment of the present application. As shown in Fig. 2, each of the relay nodes will transmit the control signaling to the central unit of the donor node. For instance, relay node 2 will transmit the control signaling to the donor node through the mobile terminal portion, or relay node 2 receives the control signaling transmitted by the donor node through the mobile terminal portion. According to various embodiments, the relay node can be referred as 'IAB node' or `IAB-donor node'.

The control signaling of the relay node includes the control signaling generated by the distribution unit and the control signaling generated by the mobile terminal. The control signaling generated by the distribution unit may refer to an F1AP message defined by the 3GPP TS 38.473 protocol. The F1AP message defined in that protocol may be the control signaling including the user who accesses the distribution unit of relay node 2 (see "control signaling from the user after processed by the F1AP" in FIG. 2). The control signaling is obtained after the control signaling from the user is processed via the F1AP, that is, the control signaling is generated by placing the control signaling from the user in the F1AP message. The control signaling generated by the distribution unit may also be the ones generated by the distribution unit itself (see "control signaling generated by F1AP itself" in FIG. 2). The control signaling generated by the mobile terminal is the control signaling that does not include the F1AP message. Such control signaling will be transmitted outward after being processed via the protocol stack RRC/PDCP/Adapt/RLC/MAC/PHY of the mobile terminal portion, or is obtained after being processed via these protocol layers, among which the RRC protocol layer is an optional protocol layer. An Adapt protocol layer is also an optional protocol layer, which can be located between the PDCP and RLC layers, or between the RLC and the MAC layers, and it mainly aids each of the relay nodes to route each data packet.

With regard to the uplink (the control signaling is transmitted from relay node 2 to relay node 1), the control signaling generated by the mobile terminal portion of relay node 2 (i.e., the control signaling from the distribution unit portion of relay node 2 is not included) will be processed via the F1AP of the distribution unit of relay node 1 after the control signaling transmitted by relay node 2 is received by relay node 1, and then handed over to the mobile terminal portion of relay node 1 for transmissions. The control signaling generated by the distribution unit portion of relay node 2 will be directly transmitted through the mobile terminal portion of relay node 1. With regard to the downlink (the control signaling is transmitted from relay node 1 to relay node 2), the control signaling with respect to the mobile terminal of relay node 2 received by relay node 1 from other nodes (this signaling does not need to be processed by the distribution unit of relay node 2) will be transmitted to the mobile terminal portion of relay node 2 after being processed via the F1AP of the distribution unit of relay node 1. The control signaling with respect to the distribution unit of relay node 2 will be directly transmitted from the distribution unit portion of relay node 1 to the mobile terminal of relay node 2 after being received by the mobile terminal portion of relay node 1, and will be processed via the F1AP of the distribution unit of relay node 2. It can be seen that there are two types of control signaling being transmitted between two relay nodes (relay node 1 and relay node 2), which are respectively the control signaling that does not need to be reprocessed via the F1AP of the distribution unit portion of the relay node, and the control signaling that needs to be processed via the F1AP of the distribution unit portion of the relay node.

With regard to the control signaling that does not need to be reprocessed via the F1AP of the distribution unit portion of the relay node, the signaling contains an F1AP message, and the signaling may be an RRC message containing an F1AP message, or an F1AP message, or a PDU (such as a PDCP PDU or an RLC PDU) of an RRC message containing an F1AP message, or a PDU (such as a PDCP PDU or an RLC PDU, etc.) containing an F1AP message. As described above, with regard to the uplink, the control signaling generated by the distribution unit of relay node 2 does not need to be processed via the F1AP of the distribution unit of relay node 1; with regard to the downlink, the control signaling transmitted to the distribution unit of relay node 2 does not need to be processed via the F1AP of the distribution unit of relay node 1. Such messages may be referred to as the F1AP of the mobile terminal or the F1AP of the distribution unit. For ease of explaining, MT's F1AP will be used to indicate the message generated by the F1AP of the distribution unit of the relay node, in the description of the present specification, but this is not a limitation to the present application.

With regard to the control signaling that need to be processed via the F1AP of the distribution unit portion of the relay node, the signaling contains an RRC message, and the RRC message does not contain the F1AP message. The signaling may be an RRC message, or a PDU (such as a PDCP PDU or an RLC PDU) containing an RRC message. As described above, with regard to the uplink, the control signaling generated by the mobile terminal of relay node 2 (not including the F1AP message generated by the distribution unit portion) need to be processed via the F1AP of the distribution unit of relay node 1; with regard to the downlink, the control signaling transmitted to the mobile terminal portion of relay node 2 (the signaling does not need to be processed by the distribution unit of relay node 2) need to be processed via the F1AP of the distribution unit of relay node 1. For ease of explaining, MT's RRC will be used to indicate the RRC message that does not contain the F1AP message, in the description of the present specification, but this is not a limitation to the present application.

The transmission of the control signaling is carried by a signaling radio bearer (SRB). The control signaling on the SRB will be transmitted or received after being processed via the PDCP/RLC/MAC/PHY. With respect to a kind of SRB of each user, a PDCP entity, an RLC entity, a logical channel, and a corresponding MAC layer and PHY layer will be configured on the user side. Correspondingly, the PDCP entity, the RLC entity, the logical channel, and the corresponding MAC layer and PHY layer will also be configured on the network side. The currently defined SRBs include SRB0, SRB1/1s, SRB2/2s, and SRB3.

Each type for SRB can be defined as the following:
- SRB0 is for radio resource control (RRC) messages using the common control channel (CCCH) logical channel;
- SRB1 is for RRC messages (which may include a piggybacked non-access stratum (NAS) message) as well as for NAS messages prior to the establishment of SRB2, all using dedicated control channel (DCCH) logical channel;
- SRB2 is for NAS messages, all using DCCH logical channel. SRB2 has a lower priority than SRB1 and may be configured by the network after AS security activation;
- SRB3 is for specific RRC messages when UE is in (NG)EN-DC or NR-DC, all using DCCH logical channel.

Split SRB is supported for all the MR-DC options in both SRB1 and SRB2 (split SRB is not supported for SRB0 and SRB3). The split SRB in SRB1 is referred as SRB1s or SRB 1-split. The split SRB in SRB2 is referred as SRB2s or SRB2-split. For more detailed descriptions of SRB, please refer to "Section 4.2.2." in TS 3GPP 38.331.

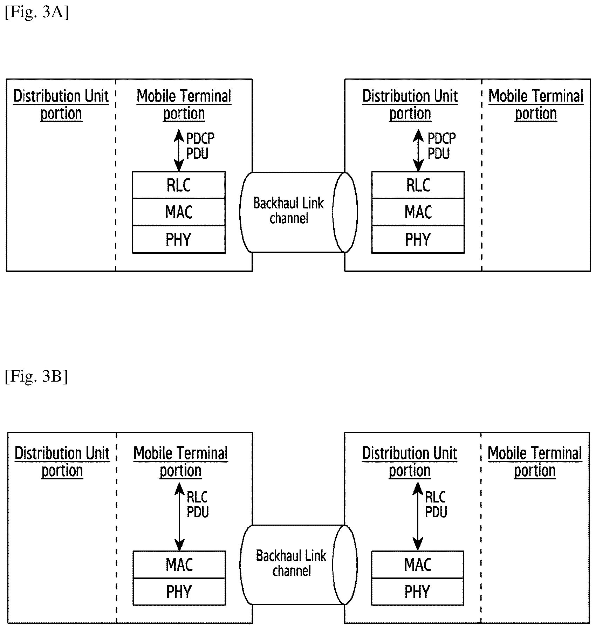

In the relay network, an SRB is also defined between two relay nodes, and a special channel, that is, the Backhaul Link channel, which can be used to carry a data packet processed via the PDCP layer (such as a PDCP PDU), is also defined, as shown in Figure 3A; or the channel can be used to carry a data packet processed via the RLC layer (RLC PDU), as shown in Figure 3B. In case of Figure 3B, the backhaul link channel is a RLC channel and can be referred as 'backhaul RLC channel' in IAB network.

The Backhaul Link channel has a corresponding logical channel. In the relay network, MT's F1AP and MT's RRC will be transmitted over the Backhaul Link channel between the relay nodes, and finally to the central unit of the donor node, or finally to the relay node from the central unit of the donor node.

In the prior art, the transmissions of MT's F1AP and MT's RRC over the Backhaul Link channel have not been considered, and how MT's F1AP is carried in the SRB has not been considered either. The embodiments of the present application are directed to these problems, and propose a method for transmitting MT's F1AP and MT's RRC between the relay nodes. According to the present application, interactions of user related context between the central unit and the distribution unit of a base station, as well as between the relay nodes can be implemented.

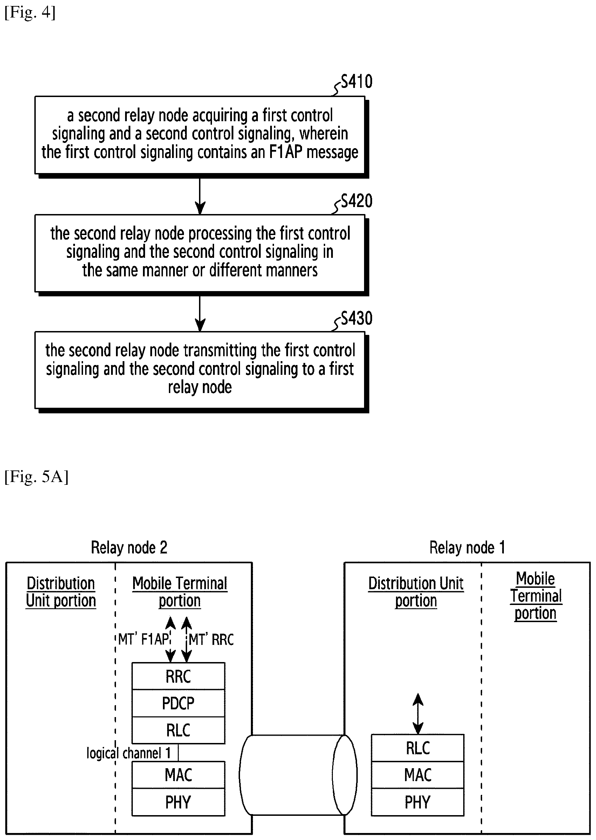

FIG. 4 illustrates a flowchart of a method for transmitting the control signaling in the relay network according to an embodiment of the present application. As shown, a method for transmitting the control signaling in the relay network mainly includes:
Step S410: A second relay node acquires a first control signaling and a second control signaling, wherein the first control signaling includes an F1AP message.
Step S420: The second relay node processes the first control signaling and the second control signaling in the same or different manners.
Step S430: The second relay node transmits the first control signaling and the second control signaling to a first relay node.

Although FIG.4 describes that the second relay node acquires second control signaling with the first control signaling, but it is used only for convenience of description to compare two control signaling. Therefore, the present disclosure is not limited by the operations described below, and other terms having equivalent technical meanings may be used. In some embodiments, the second relay node the second control signaling can be omitted. The second relay node can each control signaling independently.

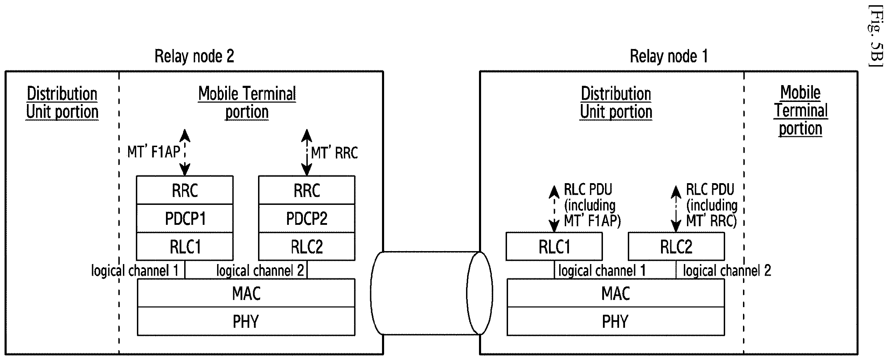

Figs. 5A to 5D respectively illustrates schematic diagrams of the method for transmitting the control signaling in the relay network according to an embodiment of the present application. Hereinafter, based on the relay network example shown in FIG. 1, taking the F1AP generated by the distribution unit of relay node 2 and the RRC message of the mobile terminal portion of relay node 2 are transmitted between the mobile terminal portion of relay node 2 and the distribution unit of relay node 1, that is, MT's F1AP and MT's RRC of relay node 2, as an example, specific embodiments of the transmission procedures of the control signaling described above are explained in detail.

Prior to explanations, it should be noted that the F1AP messages contained in MT's F1AP at a relay node include:
1) The F1AP containing the RRC message of the user served by the distribution unit portion of the relay node, and this contained RRC message may be carried on SRB0/1/1s/2/2s/3 by the user.
2) The F1AP message that is related to the user served by the distribution unit portion of the relay node (UE-associated F1AP), and this message does not contain or contains the RRC message of the user.
3) The F1AP message that is unrelated to the user served by the distribution unit portion of the relay node (non-UE-associated F1AP).

F1AP provides the signalling service between gNB-DU and the gNB-CU that is required to fulfil the F1AP functions (e.g., described in clause 7 in 3GPP TS 38.473). F1AP services can be divided into two groups:
- Non UE-associated services: They are related to the whole F1 interface instance between the gNB-DU and gNB-CU utilizing a non UE-associated signalling connection.
- UE-associated services: They are related to one UE. F1AP functions that provide these services are associated with a UE-associated signalling connection that is maintained for the UE in question.

The mobile terminal of a relay node may transmit the F1AP generated by the distribution unit of the relay node in the same manner, that is, all MT's F1APs are transmitted in the same manner (as assumed in various embodiments described above). The F1AP messages described above may also be classified, such as F1AP message type 1, F1AP message type 2, etc. Different types of F1AP messages may be transmitted in different manners, and may be also in the same manner.

Classification methods for MT's F1AP are as follows: one classification method example is to classify according to the transmission manner of MT's F1AP. The F1AP messages using the same transmission manner (such as the same SRB bearer, the same Backhaul Link channel bearer, the same logical channel transmission, the processing by one or more same protocol entities (such as the PDCP protocol entity, the RLC protocol entity, the MAC protocol entity, the PHY protocol entity) are the same type of message; another classification method example is to classify according to content. Existing F1AP messages can be classified into types as follows:
■ non-UE-associated F1AP message
■ UE-associated F1AP message that does not contain the RRC message
■ F1AP that contains the RRC message carried by the SRB0
■ F1AP that contains the RRC message carried by the SRB1
■ F1AP that contains the RRC message carried by the SRB2
■ F1AP that contains the RRC message carried by the SRB3

When F1AP messages are classified according to content, one or more types of F1AP messages above may be used as one type. For instance, one possible classification method is: all UE-associated F1AP messages are of F1AP message type 1, and all non-UE-associated F1AP messages are of F1AP message type 2; another possible classification method is: all F1APs that contain the RRC message carried by the SRB0 are of F1AP message type 1, and all F1APs that contain the RRC message carried by the SRB1 are of F1AP message type 2, all UE-associated F1AP messages that do not contain the RRC message are of F1AP message type 4, and all F1AP messages that contain non-UE-associated F1AP messages are of F1AP message type 5; another classification method is: F1APs that contain the RRC message carried by the SRB0 are of F1AP message type 1, F1APs that contain the RRC message carried by the SRB1 and the SRB3 are of F1AP message type 2, F1APs that contain the RRC message carried by the SRB2 are of F1AP message type 3, all UE-associated F1AP messages that do not contain the RRC message are of F1AP message type 4, and all F1AP messages that contain non-UE-associated F1AP messages are of F1AP message type 5. The present application does not limit other possible classification methods, as well as other types of MT's F1AP. As described above, the message type can be defined according to at least one of whether F1AP service is a UE-associated service or a non UE-associated services, whether the message contains RRC or not, a SRB type for the message. Two or more limitations may be considered together, so that one type for a message may be defined.

In the descriptions below, MT's F1AP may include one or more types, and MT's RRC may also include one or more types (MT's RRC carried by different existing SRBs, such as SRB0/1/1s/2/2s/3, may be considered as different types). If there is only one type, it means that all MT's F1APs fall into one type. If there is only one type of MT's RRC, it means that all MT's RRCs are classified into one type.

Example 1: One or more types of MT's F1AP and one or more types of MT's RRC use the same SRB bearer, or one or more types of messages in MT's F1AP and another one or more types of messages in MT's F1AP use the same SRB bearer. As shown in FIG. 5A, taking one type of MT's F1AP and one type of MT's RRC using the same SRB bearer as an example (when considering that one or more types of messages in MT's F1AP and another one or more types of messages in MT's F1AP use the same SRB bearer, the "MT's RRC" in the following descriptions may be replaced with "another type of message of MT's F1AP"), that is, MT's F1AP and MT's RRC are processed over the same PDCP/RLC and logical channel, and the SRB is an existing SRB, such as one of SRB0/1/2/2s/3 or a new-defined SRB; in order to distinguish these two types of messages, the method is to add an Adapt layer on top of the RLC entity or the MAC entity. One of the effects of the Adapt layer is to add or read indication information in a data packet, which indicates whether MT's F1AP or MT's RRC is included in the data packet. In addition, the indication information can also be added within the MAC header, such that there is no need to add an Adapt layer.

In a specific embodiment, that indication information is the indication information on the type of the data packet, for instance, "1" represents that the data packet is one containing MT's F1AP, and "0" represents that the data packet is one containing MT's RRC.

In another specific embodiment, with regard to the packet of MT's F1AP, the identification information of the relay node (such as an ID of the relay node, an ID of the distribution unit of the relay node, and an ID of the mobile terminal of the relay node, etc.) will be added by the protocol layer; with regard to the packet of MT's RRC, predefined information (such as all "0", or all " 1") will be added by the protocol layer.

In still another specific embodiment, distinguishment is performed by adding identification information. In one embodiment, that identification information indicates the identification information of the node at which the distribution unit processing the data packet is located. For instance, with regard to the packet of MT's F1AP, the identification information of relay node 2 (such as an ID of the relay node, an ID of the distribution unit of the relay node, an ID of the mobile terminal of the relay node, and an identification of the cell to which the mobile terminal portion of the relay node accesses, etc.) is added; with regard to the packet of MT's RRC, the identification information of relay node 1 (such as an ID of the relay node, an ID of the distribution unit of the relay node, an ID of the mobile terminal of the relay node, and an identification of the cell to which the mobile terminal portion of the relay node accesses, etc.) is added. In such implementation, the donor node or relay node 1 will transmit the identification information of relay node 1 to relay node 2. In this embodiment, if the data packet received by a relay node, including control signaling, contains the identification information of the relay node, the relay node will transfer the data packet to the distribution unit thereof for processing.

In another embodiment (in this embodiment, it is not required to distinguish between MT's F1AP and MT's RRC), that identification information indicates the identification information of the node at which the data packet including control signaling terminates (Terminated node). The "the node at which the data packet terminates" indicates the identification information of the RRC entity and/or the F1AP entity processing the data packet. That is, only after the data packet is received by the relay node indicated by the identification information, the data packet can be processed by the RRC layer of the mobile terminal of the relay node, or processed by the distribution unit of the relay node, or processed by both the mobile terminal and the distribution unit of the relay node. Then the data packet will not be transmitted to other nodes. However, part of the control signaling obtained after the data packet is processed can be transmitted to other nodes. For instance, with regard to MT's RRC of relay node 2, that identification information is the identification information of relay node 2; with regard to MT's F1AP of relay node 2, that identification information is the identification information of relay node 2. The data packet with the identification information will be handed over to the RRC and/or the F1AP only when it is received by relay node 2, other relay nodes only forward the data packet otherwise. In such implementation, MT's F1AP and MT's RRC are transmitted using the same SRB, as well as processed in the same manner, such that the relay node receiving MT's F1AP and MT's RRC does not need to process the two types of information in different manners. For instance, with regard to the uplink, the mobile terminal of relay node 2 transmits MT's F1AP and MT's RRC to relay node 1, and the identification information of relay node 2 will be added for such two control signaling. In this way, MT's RRC will not be handed over to the distribution unit of relay node 1 for processing after it is received by relay node 1. With regard to the downlink, relay node 1 does not need to hand MT's RRC over to the distribution unit for processing and then transmit it to relay node 2, due to the data packet carries the identification information of relay node 2, after relay node 1 received MT's RRC and MT's F1AP of relay node 2.

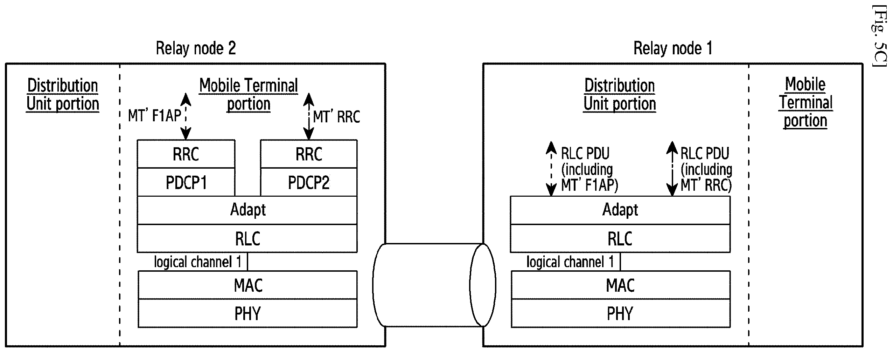

Example 2: One or more types of MT's F1AP and one or more types of MT's RRC use different SRB bearers, or one or more types of messages in MT's F1AP and another one or more types of messages in MT's F1AP use different SRB bearers. As shown in FIG. 5C, taking one type of MT's F1AP and one type of MT's RRC using different SRB bearers as an example (when considering that one or more types of messages in MT's F1AP and another one or more types of messages in MT's F1AP use different SRB bearers, the "MT's RRC" in the following descriptions may be replaced with "another type of message of MT's F1AP"). For instance, the SRB used to carry MT's F1AP is SRB_x (corresponding to PDCP1/RLC1 and logical channel 1), and the SRB used to carry MT's RRC is SRB_y (SRB_y is an existing SRB, such as SRB0/1/2/2s/3/3s, or a new-defined SRB, corresponding to PDCP2/RLC2 and logical channel 2). The advantage of this method is: with regard to the uplink, relay node 1 can determine whether MT's F1AP or MT's RRC is contained according to the data packets outputted through different RLC entities. If it is the MT's RRC that is contained, relay node 1 will process it through the distribution unit of relay node 1, and if it is the MT's F1AP that is contained, relay node 1 will directly hand it over to the mobile terminal portion of relay node 1 for transmitting.

A specific implementation of example 2 described above is: SRB_x is a new-defined SRB. Since MT's RRC is carried using an existing SRB, MT's F1AP can be naturally distinguished from MT's RRC.

Another specific implementation of example 2 described above is: SRB_x is an existing SRB, such as MT's RRC is carried using SRB1, and MT's F1AP is carried using SRB2. When configured, the SRB2 can be indicated to carry MT's F1AP only.

A further specific implementation of example 2 described above is: SRB_x and SRB_y are different SRBs and both of them are newly defined, then MT's F1AP can be naturally distinguished from MT's RRC.

A further specific implementation of example 2 described above is: both SRB_x and SRB_y are existing SRBs, such as MT's RRC is carried using SRB1, and MT's F1AP is carried using SRB2. When configured, the SRB2 can be indicated to carry MT's F1AP only.

In addition, MT's F1AP described above may be included in one or more RRC messages as an Information Element (IE), and the RRC messages may be one or more new-defined RRC messages (such as F1AP *MessageTransfer*), or may be one or more existing RRC messages (such as *RRCReconfiguration, ULInformationTransfer, DLInformationTransfer,* etc., see 3GPP TS 38.331). When MT's F1AP is included in one or more existing RRC messages, if the RRC messages contain MT's F1AP, MT's F1AP will be transmitted on SRB_x, and if not, it will be transmitted on SRB_y.

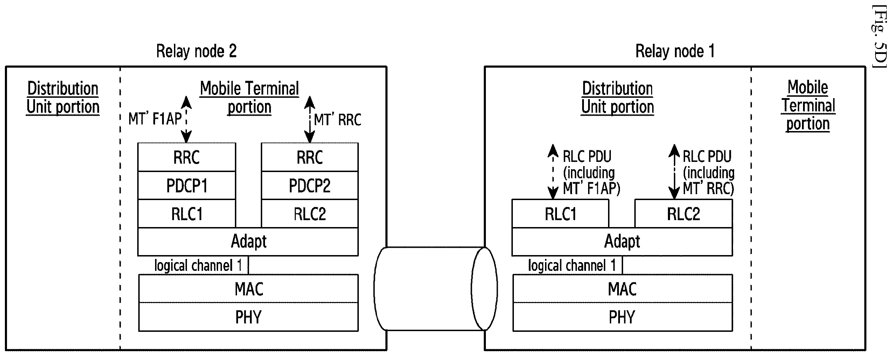

Example 3: One or more types of MT's F1AP share the same Backhaul Link channel as one or more types of MT's RRC, or one or more types of messages in MT's F1AP share the same Backhaul Link channel as another one or more types of messages in MT's F1AP. Taking one type of MT's F1AP shares the same Backhaul Link channel as one type of MT's RRC as an example (when considering that one or more types of messages in MT's F1AP share the same Backhaul Link channel as another one or more types of messages in MT's F1AP, the "MT's RRC" in the following descriptions may be replaced with "another type of message of MT's F1AP"). For instance, the same RLC entity and logic channel but different PDCP entities are used, as shown in Figure 5C; or the same logical channel but different PDCP entities and RLC entities are used, as shown in Figure 5D. The advantage of this method is also in that it can distinguish between MT's F1AP and MT's RRC, such that relay node 1 can perform different processing on the two types of control information. One possible processing is that MT's RRC will be processed via the F1AP of the distribution unit portion of relay node 1, while MT's F1AP will not.

Referring to FIG. 5C, both MT's F1AP and MT's RRC are processed via the same RLC entity, and are transferred between the RLC entity and the MAC entity over the same logical channel (the logical channel between the RLC entity and the MAC entity). However, the PDCP entity used by MT's F1AP is PDCP1, and the PDCP entity used by MT's RRC is PDCP2. To distinguish between the two types of control signaling, an Adapt layer is added on top of the RLC entity. One of the effects of the Adapt layer is to add or read the indication information in a data packet, regarding indicating the distinguishment between MT's F1AP and MT's RRC, or the indication information of the node processing the data packet. The indication information indicates that whether the node having received the data packet needs to perform RRC layer processing and/or F1AP processing on the data packet.

In a specific embodiment, that indication information may be the indication information indicating the type of the data packet. For instance, "1" indicates that the data packet is a data packet containing MT's F1AP, and "0" indicates that the data packet is a data packet containing MT's RRC.

In another specific embodiment, with regard to the data packet containing MT's F1AP, the adaptation protocol layer will add the identification information of the relay node (such as an ID of the relay node, an ID of the distribution unit of the relay node, an ID of the mobile terminal of the relay node, and an identification of the cell to which the mobile terminal portion of the relay node accesses, etc.) into the data packet; with regard to the data packet containing MT's RRC, the adaptation protocol layer will add predefined information into the data packet (such as all "0" or all "1").

In yet another specific embodiment, distinguishment is performed by adding different identification information. In one embodiment, that identification information indicates the identification information of the node at which the distribution unit processing the data packet is located. For instance, with regard to the packet of MT's F1AP, the identification information of relay node 2 (such as an ID of the relay node, an ID of the distribution unit of the relay node, an ID of the mobile terminal of the relay node, and an identification of the cell to which the mobile terminal portion of the relay node accesses, etc.) is added; with regard to the packet of MT's RRC, the identification information of relay node 1 (such as an ID of the relay node, an ID of the distribution unit of the relay node, an ID of the mobile terminal of the relay node, and an identification of the cell to which the mobile terminal portion of the relay node accesses, etc.) is added. In such implementation, the donor node or relay node 1 will transmit the identification information of relay node 1 to relay node 2. In this embodiment, if the data packet received by a relay node, including control signaling, contains the identification information of the relay node, the relay node will transfer the data packet to the distribution unit thereof for processing.

In another embodiment (in this embodiment, it is not required to distinguish between MT's F1AP and MT's RRC), that identification information indicates the identification information of the node at which the data packet including control signaling terminates (Terminated node). The "the node at which the data packet terminates" indicates the identification information of the RRC entity and/or the F1AP entity processing the data packet. That is, only after the data packet is received by the relay node indicated by the identification information, the data packet can be processed by the RRC layer of the mobile terminal of the relay node, or processed by the distribution unit of the relay node, or processed by both the mobile terminal and the distribution unit of the relay node. Then the data packet will not be transmitted to other nodes. However, part of the control signaling obtained after the data packet is processed can be transmitted to other nodes. For instance, with regard to MT's RRC of relay node 2, that identification information is the identification information of relay node 2; with regard to MT's F1AP of relay node 2, that identification information is the identification information of relay node 2. The data packet with the identification information will be handed over to the RRC and/or the F1AP only when it is received by relay node 2, other relay nodes only forward the data packet otherwise. In such implementation, MT's F1AP and MT's RRC are transmitted using the same SRB, as well as processed in the same manner, such that the relay node receiving MT's F1AP and MT's RRC does not need to process the two types of information in different manners. For instance, with regard to the uplink, the mobile terminal of relay node 2 transmits MT's F1AP and MT's RRC to relay node 1, and the identification information of relay node 2 will be added for such two control signaling. In this way, MT's RRC will not be handed over to the distribution unit of relay node 1 for processing after it is received by relay node 1. With regard to the downlink, relay node 1 does not need to hand MT's RRC over to the distribution unit for processing and then transmit it to relay node 2, due to the data packet carries the identification information of relay node 2, after relay node 1 received MT's RRC and MT's F1AP of relay node 2.

Referring to Fig. 5C, the transfer of the data packet is as follows:
with regard to the uplink, the Adapt layer of the mobile terminal portion of relay node 2 adds the indication information indicating the type of the data packet described above for the data packets from PDCP1 and PDCP2, and then hands them over to the same RLC entity for processing. The data packets are transferred to the MAC entity over the same logical channel, and finally to the distribution unit portion of relay node 1. At relay node 1, the data packets from relay node 2 will be processed through the distribution unit of relay node 1. The Adapt layer of the distribution unit will read the information in the data packet from the RLC entity, and determines whether it is MT's F1AP or MT's RRC that is contained in the data packet according to the information. If MT's RRC is contained, the packet needs to be processed via the F1AP of the distribution unit of relay node 1 and then transmitted through the mobile terminal potion of relay node 1, and if not, the packet may be directly handed over to the mobile terminal portion of relay node 1 for processing and transmitting .

With regard to the downlink, the Adapt layer of the distribution unit portion of relay node 1 will add different indication information for the data packet containing MT's F1AP and the data packet containing MT's RRC respectively, and then hands them over to the same RLC entity for processing. The data packets are transferred to the MAC entity over the same logical channel, and finally to the mobile terminal portion of relay node 2. The protocol layer of the mobile terminal portion of relay node 2 will read the information in the data packet from the RLC entity, which can indicate whether the data packet from the RLC entity is a packet containing MT's F1AP or a packet containing MT's RRC. If it is a packet containing MT's F1AP, the packet will be transferred to the PDCP entity (i.e. PDCP1) serving MT's F1AP after processed via the Adapt layer (such as removing the packet header information related to the Adapt layer in the data packet).

The embodiment in Fig. 5D is similar to Fig. 5C except that the Adapt layer is located between the RLC layer and the MAC layer. With regard to the uplink, the mobile terminal portion of relay node 2 adds the indication information described above for the data packets from different RLC entities, and with regard to the downlink, the mobile terminal portion of relay node 2 reads information in the data packet from the same logical channel and transfers the data packet to different RLC entities according to the difference between the indication information above.

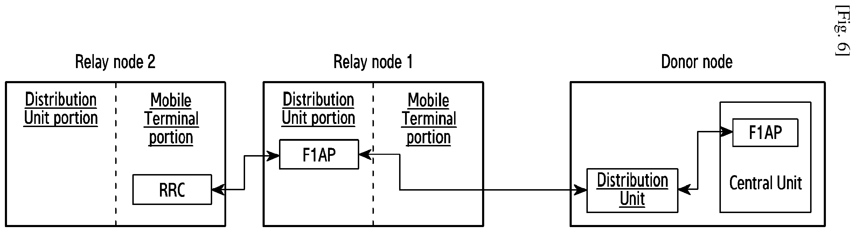

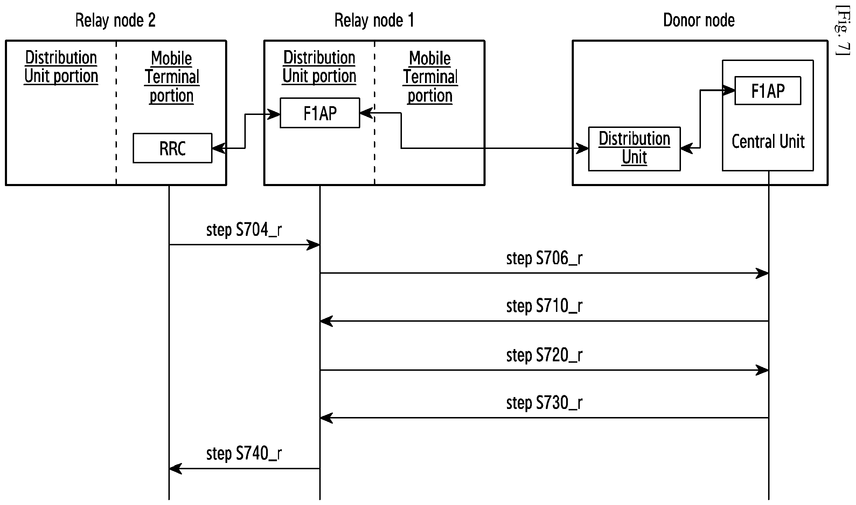

In order to implement the transmissions of MT's F1AP and MT's RRC between the relay nodes in the IAB network, it is required to configure the mobile terminal potion of the relay node. Therefore, in accordance with another aspect of the present application, a method of configuring a relay node through a donor node is provided. The entities involved in the configuration procedure are shown in Figure 6. The transmissions of the configuration information in the configuration procedure are shown in Figure 7.

Fig. 6 illustrates three nodes, namely relay node 2, relay node 1, and a donor node. The donor node includes a distribution unit and a central unit, and the distribution unit and the central unit are connected by wired lines, it is an F1 interface there, including F1-C and F1-U. The distribution unit of the donor node communicates with relay node 1 via a wireless link. They may communicate directly or communicate through one or more other relay nodes. Relay node 1 and relay node 2 are directly connected and communicate via a wireless link. The configuration procedure is implemented by: performing configuration messages interaction between the central unit of the donor node and the distribution unit of relay node 1 (in the interaction procedure, the configuration messages will be transmitted between the central unit of the donor node and the distribution unit of the relay node directly or by being forwarded through one or more entities), and then sending the generated configuration messages from the donor node to the mobile terminal portion of relay node 2 after being forwarded through one or more entities.

In FIG.6, the Relay node 2 correspond to IAB-node 2. the Relay node 1 correspond to IAB-node 1. the donor node correspond to IAB-donor node including DU ad CU. Referring to FIG. 6, the present disclosure describes some procedures of backhaul link channel establishment. The backhaul link channel can be referred as the backhaul RLC channel, as described above. The backhaul RLC channel is an RLC channel used for backhauling between IAB-node and IAB-donor-DU, or between different IAB-nodes.

Hereinafter, in assuming that IAB network shown in the FIG. 6, the exemplary operations are described. However, operations described below are described by way of example in order to facilitate understanding of IAB nodes, and should not be construed as limiting the embodiments of the present disclosure.
1. First, UE, IAB node 1, IAB node 2, and IAB-donor node perform UE initial access procedure. The IAB-node 2 is configured with information to set up the access DRB.
2. IAB-donor-CU sends to the IAB-donor-DU an F1-AP request message for setting up the parent DU side of the BH link between lAB-donor DU and IAB-node 1. This step is optional and is required when a new BH RLC channel needs to be established on the BH link between IAB-donor-DU and IAB-node 1.
3. IAB-donor-DU responds to the F1-AP request message from the IAB-donor-CU from step 2.
4. IAB-donor-CU sends to the IAB-donor-DU an DL RRC MESSAGE TRANSFER message encapsulating the RRC Reconfiguration message for configuring the MT functionality of the IAB-node 1. This step is optional and is required when a new BH RLC channel needs to be established on the BH link between IAB-donor-DU and IAB-node 1.
5. The IAB-donor-DU decapsulates and forwards the RRC Reconfiguration message to the MT functionality of the IAB-node 1. This step is optional and is required when a new BH RLC channel needs to be established on the BH link between IAB-donor-DU and IAB-node 1.
6. The MT functionality of the IAB-node 1 sends to the IAB-donor-DU an RRC Reconfiguration Complete message destined to the IAB-donor-CU. This step is optional and is required when a new BH RLC channel needs to be established on the BH link between IAB-donor-DU and IAB-node 1.
7. The IAB-donor-DU sends the UL RRC MESSAGE TRANSFER Message encapsulating the RRC Reconfiguration Complete message to the IAB-donor-CU. This step is optional and is required when a new BH RLC channel needs to be established on the BH link between IAB-donor DU and IAB-node 1.
8. IAB-donor-CU sends to the DU functionality of IAB-node 1 an F1-AP request message for setting up the parent DU side of the BH link between IAB-node 1 and IAB-node 2. This step is optional and is required when a new BH RLC channel needs to be established on the BH link between IAB-node 1 and IAB-node 2.
9. IAB-node 1 responds to the F1-AP request message from the IAB-donor-CU from step 8.
10. IAB-donor-CU sends to the DU functionality of IAB-node 1 a DL RRC MESSAGE TRANSFER message encapsulating the RRC Reconfiguration message for configuring the MT functionality of IAB-node 2. This step is optional and is required when a new BH RLC channel needs to be established on the BH link between IAB-node 1 and IAB-node 2.
11. The DU functionality of IAB-node 1 decapsulates and forwards the RRC Reconfiguration message to the MT functionality of the IAB-node 2. This step is optional and is required when a new BH RLC channel needs to be established on the BH link between IAB-node 1 and IAB-node 2.
12. The MT functionality of the IAB-node 2 sends to the IAB-node 1 an RRC Reconfiguration Complete message destined to the IAB-donor-CU. This step is optional and is required when a new BH RLC channel needs to be established on the BH link between IAB-node 1 and IAB-node 2.
13. The IAB-node 1 sends the ULRRC MESSAGE TRANSFER Message encapsulating the RRC Reconfiguration Complete message to the IAB-donor-CU. This step is optional and is required when a new BH RLC channel needs to be established on the BH link between IAB-node 1 and IAB-node 2.
14. IAB-donor-CU sends to the DU functionality of IAB-node 2 an UE context modification request for the UE DRB.
15. The DU functionality of the IAB-node 2 sends the UE context modification response to the IAB-donor-CU.
16. The IAB-Donor CU generates the RRC Reconfiguration message and encapsulates it in the DL RRC MESSAGE TRANSFER message for the DU functionality of IAB-node 2.
17. The DU functionality of the IAB-node 2 sends the RRC Reconfiguration message to the UE.
18. The UE sends RRC Reconfiguration Complete message to the DU functionality of the IAB-node 2.
19. The DU functionality of IAB-node 2 encapsulates the RRC message in the UL RRC MESSAGE TRANSFER message and sends it to IAB-Donor CU.

The IAB-donor-CU uses the existing CU-DU split principles and the F1-AP signaling to configure the parent DU side of the RLC channel. The lAB-donor-CU uses RRC signaling (which is piggybacked in F1-AP messages terminating at the parent DU side of the backhaul RLC channel) to configure the child IAB-node part of the backhaul RLC channel (i.e. the MT functionality of the child node).

Referring to FIG. 7, a configuration method according to an embodiment of the present application includes the following operations. In some embodiments, the purpose of the operations is to establish the UE Context including, among others, SRB, DRB and BH RLC channel configuration. In a such case, the procedure uses UE-associated signalling.

In step S710_r, the first relay node receives a first configuration message from a donor node, wherein the first configuration message is used for configuring transmissions of an F1AP message with a second relay node. The first configuration message may be sent from the central unit of the donor node to the distribution unit of relay node 1. The first configuration message may be a UE context setup request message or a UE context modification request message.

In a specific embodiment, the first configuration message includes at least one of the following information:
1) Identification information of relay node 2, such as the identification information of the mobile terminal of relay node 2.
2) Information of the SRB that is required to be established or modified.
   In other embodiments, the information of the SRB that is required to be established or modified includes at least one of the following information:
   2.1) SRB identification information, such as an SRB ID.
   2.2) Indication information indicating the type of information carried by the SRB. The type of the information carried by the SRB may be one or more of the following types: an RRC message that does not contain the F1AP, an RRC message that contains the F1AP, an F1AP message, an RRC message that contains F1AP message type 1, an F1AP message that contains F1AP message type 1, an RRC message that contains F1AP message type 2, an F1AP message that contains F1AP message type 2, ......, an RRC message that contains F1AP message type n, and F1AP message that contains F1AP message type n, etc. The indication information may be an SRB ID, identification information of an information type, etc. The indication information may be explicity information or implicit information (for instance, the type of the information carried by the SRB can be obtained by using the SRB ID).
   2.3) Indication information of the type of the information additionally carried, which indicates that the information that the SRB can be able to additionally carry in addition to the information of MT's RRC that is carried by the SRB indicated by the SRB identification information. The type of the information additionally carried may be one or more of the following types: an RRC message that contains the F1AP, an F1AP message, an RRC message that contains F1AP message type 1, an F1AP message that contains F1AP message type 1, an RRC message that contains F1AP message type 2, an F1AP message that contains F1AP message type 2,......, an RRC message that contains F1AP message type n, and an F1AP message that contains F1AP message type n, etc.
3) Information of the Backhaul Link channel that is required to be established.

In other embodiments, the information of the Backhaul Link channel that is required to be established includes at least one of the following information:
3.1) Identification information of the Backhaul Link channe (as claimed)
3.2) Indication information of the type of the information carried over the Backhaul Link channe (as claimed), such as an RRC message that does not contain the F1AP, an RRC message that contains the F1AP, an F1AP message, an RRC message that contains F1AP message type 1, an F1AP message that contains F1AP message type 1, an RRC message that contains F1AP message type 2, an F1AP message that contains F1AP message type 2,......, an RRC message that contains F1AP message type n, and F1AP message that contains F1AP message type n, etc. The indication information may be explicit information or implicit information (for instance, the type of the information carried by the SRB can be obtained by using the SRB ID).
3.3) Identification information of the SRB carried over the Backhaul Link channel, such as an SRB ID.
3.4) Indication information on whether there is an Adapt protocol layer. If there is an Adapt protocol layer, it means that the Adapt protocol layer header is required to be added to the data packet from the upper layer (such as the PDCP layer or the RLC layer), and with regard to the data packet from the lower layer (such as the RLC layer or the MAC layer), it is required to read the content of the Adapt protocol layer and remove the Adapt protocol layer header. Further, the indication information may also indicate that the identification information of the relay node at which the RRC layer and/or the distribution unit processing the data packet is located is added (such as an ID of the relay node, an ID of the distribution unit of the relay node, an ID of the mobile terminal of the relay node, and an identification of the cell to which the mobile terminal portion of the relay node accesses, etc.).
3.5) Indication information of the information contained in the Adapt protocol layer. The indication information contains one of the following information:
   3.5.1) Indication information of the types of information contained. For instance, the information contained is indication information of the identification information of the relay node, the information contained is indication information of the identification information of the SRB, the information contained is indication information of the identification information of the logical channel, etc.
   3.5.2) The content of the information contained is at least one of the following information: the identification information of the relay node (in one embodiment, the relay node indicated by the identification information is the relay node at which the RRC layer and/or the distribution unit processing the data packet is located), the identification information of the SRB, the identification information of the logical channel, etc.
   3.5.3) Length information of the information contained. For instance, 1 bit, 32 bits, 36 bits, etc.
3.6) Indication information of the priority of the Backhaul Link channel. For instance, "1" indicates the highest priority, "2" indicates the second priority, and "3" indicates the third priority, etc. After receiving this indication information, the first relay node may set the priority of the Backhaul Link channel according to the indication information of the priority. For instance, the priority of the logical channel corresponding to the Backhaul Link channel may be set according to this indication information.
3.7) Transmission configuration information of the information carried over the Backhaul Link channel (such as configuration information of SCTP), including at least one of the following information:
   a) Address information of the sender party (such as the central unit of the donor node, the distribution unit of the relay node) sending the information carried over the Backhaul Link, such as an IP address.
   b) Port information of the sender party (such as the central unit of the donor node, the distribution unit of the relay node) sending the information carried over the Backhaul Link.
   c) Identification information of SCTP (Stream Control Transmission Protocol) streams.
   d) Address information of the receiver party (such as the central unit of the donor node, the distribution unit of the relay node) receiving the information carried over the Backhaul Link, such as an IP address.
   e) Port information of the receiver party (such as the central unit of the donor node, the distribution unit of the relay node) receiving the information carried over the Backhaul Link.

In step S720_r, the first relay node sends a third configuration message to the donor node. The third configuration message may be a UE context setup response message, and the UE context modification response message.

In a specific embodiment, the third configuration message includes at least one of the following information:
1) Identification information of relay node 2, such as the identification information of the mobile terminal of relay node 2.
2) Information on the accepted SRB, such as an SRB ID.
3) Information on the accepted Backhaul Link channel, such as the identification of the Backhaul Link channel.
4) Information on the unaccepted SRB, such as an SRB ID.
5) Information on the unaccepted Backhaul Link channel, such as the identification of the Backhaul Link channel.
6) Configuration information generated by relay node 1, see CellGroupConfig in 3GPP TS38.473.

In other embodiments, the configuration information generated by relay node 1 further includes at least one of the following information:
6.1) Configuration information of the RLC entity. For instance, information of one or more PDCP entities corresponding to the RLC entity, identification information of one or more SRBs corresponding to the RLC entity, etc.
6.2) Configuration information of the Adapt protocol layer. The configuration information is used to configure the information added by the Adapt protocol layer for the data packet. For instance, the identification information of the relay node (in one embodiment, the relay node indicated by the identification information is the relay node at which the RRC layer and/or the distribution unit processing the data packet is located), the identification information of the SRB, the identification information of the logical channel, etc.

An effect of the configuration process above is, the first relay node can acquire information about the Backhaul Link (such as the type of the information carried), thereby generating different configuration information for different Backhaul Links (such as configuring priorities of different Backhaul Links), which in turn routes different types of messages to different Backhaul Link channels to transmit.

In step S730_r, the first relay node receives a fourth configuration message from the donor node. The fourth configuration message is generated by the central unit of the donor node (such as a DL RRC message transmission message) and sent by the distribution unit of the donor node to the distribution unit of relay node 1.

In a specific embodiment, the fourth configuration message includes at least one of the following information:
1) Identification information of relay node 2, such as the identification information of the mobile terminal of the relay node 2.
2) Configuration information generated by the central unit of the donor node and for configuring the mobile terminal portion of relay node 2, such as an RRCReconfiguration message (see 3GPP TS 38.331). The configuration information includes the configuration information generated by relay node 1 received in step 2. Further, the configuration information for configuring the mobile terminal portion of relay node 2 includes at least information related to the Backhaul Link channel, which includes at least one of the following information:
   ■ Identification information of the Backhaul Link channel.
   ■ Indication information of the type of the information carried over the Backhaul Link channel, such as an RRC message that does not contain the F1AP, an RRC message that contains the F1AP, an F1AP message, an RRC message that contains F1AP message type 1, an F1AP message that contains F1AP message type 1, an RRC message that contains F1AP message type 2, an F1AP message that contains F1AP message type 2,......, an RRC message that contains F1AP message type n, and F1AP message that contains F1AP message type n, etc. The indication information may be explicit information or implicit information (for instance, the type of the information carried by the SRB can be obtained by using the SRB ID).
   ■ Identification information of the SRB carried over the Backhaul Link channel, such as an SRB ID.
   ■ Indication information on whether there is an Adapt protocol layer. If there is an Adapt protocol layer, it means that the Adapt protocol layer header is required to be added to the data packet from the upper layer (such as the PDCP layer or the RLC layer), and with regard to the data packet from the lower layer (such as the RLC layer or the MAC layer), it is required to read the content of the Adapt protocol layer and remove the Adapt protocol layer header. Further, the indication information may also indicate that the identification information of the relay node at which the RRC layer and/or the distribution unit processing the data packet is located is added (such as an ID of the relay node, an ID of the distribution unit of the relay node, an ID of the mobile terminal of the relay node, and an identification of the cell to which the mobile terminal portion of the relay node accesses, etc.).
   ■ Indication information of the information contained in the Adapt protocol layer. The indication information contains one of the following information:
      ➢ Indication information of the types of information contained. For instance, the information contained is indication information of the identification information of the relay node, the information contained is indication information of the identification information of the SRB, the information contained is indication information of the identification information of the logical channel, etc.
      ➢ The content of the information contained is at least one of the following information: the identification information of the relay node (in one embodiment, the relay node indicated by the identification information is the relay node at which the RRC layer and/or the distribution unit processing the data packet is located), the identification information of the SRB, the identification information of the logical channel, etc.
      ➢ Length information of the information contained. For instance, 1 bit, 32 bits, 36 bits, etc.
   ■ Indication information of the priority of the Backhaul Link channel. For instance, "1" indicates the highest priority, "2" indicates the second priority, and "3" indicates the third priority, etc. After receiving this indication information, the first relay node may set the priority of the Backhaul Link channel according to the indication information of the priority. For instance, the priority of the logical channel corresponding to the Backhaul Link channel may be set according to this indication information.
   ■ Transmission configuration information of the information carried over the Backhaul Link channel (such as configuration information of SCTP), including at least one of the following information:
      a) Address information of the sender party (such as the central unit of the donor node, the distribution unit of the relay node) sending the information carried over the Backhaul Link, such as an IP address.
      b) Port information of the sender party (such as the central unit of the donor node, the distribution unit of the relay node) sending the information carried over the Backhaul Link.
      c) Identification information of SCTP (Stream Control Transmission Protocol) streams.
      d) Address information of the receiver party (such as the central unit of the donor node, the distribution unit of the relay node) receiving the information carried over the Backhaul Link, such as an IP address.
      e) Port information of the receiver party (such as the central unit of the donor node, the distribution unit of the relay node) receiving the information carried over the Backhaul Link.

In step S740_r, the first relay node sends a second configuration message to the second relay node, wherein the second configuration message is used for configuring the transmission of an F1AP message with the second relay node. Specifically, the distribution unit of relay node 1 sends the configuration information regarding the mobile terminal portion of relay node 2 among the configuration messages generated by the central unit of the donor node to the mobile terminal portion of relay node 2.

The above steps S730_r and S740_r can be used alone for configuring the mobile terminal portion of relay node 2. An effect of the configuration process is, the second relay node can acquire information about the Backhaul Link (such as the type of the information carried), which in turn routes different types of messages to different Backhaul Link channels to transmit.

The effect of the procedure described above is in that: the central unit of the donor node can configure the distribution unit portion of relay node 1 and the mobile terminal portion of the relay node to perform the transmission of MT's F1AP and MT's RRC. The configuration process may configure relay node 2 and relay node 1 to perform transmissions according to any of the methods provided by the first aspect of the present disclosure.

Referring to FIG. 7, prior to step S710_r, the method further includes:
In step S706_r, the first relay node transmits the indication information to the donor node. Or prior to step S706_r, further including step S704_r, the first relay node receives the indication information from the second relay node. The information interaction procedure is as shown in FIG. 7. Relay node 1 transmits the indication information to the central unit of the donor node, or the mobile terminal portion of relay node 2 transmits the indication information to the distribution unit portion of relay node 1, which transmits the indication information to the central unit of the donor node.

In a specific embodiment, the indication information includes at least one of the following information:
1) Identification information of the relay node 2, such as the identification information of the mobile terminal portion of relay node 2, the identification information of the distribution unit portion of relay node 2, and an identification of relay node 2.
2) Indication information on successful configuration of relay node 2 by Operations, Administration, and Maintenance (OAM).
3) Indication information on the distribution unit portion of relay node 2 being able to work.
4) Indication information on that the distribution unit of relay node 2 needs to establish an F1 interface.
5) Indication information indicating that the node sending this indication message is a relay node.

Continue with reference to FIG. 7, with regard to the donor node, the configuration steps it performs include:
In step S710_a (step S710_r), the donor node sends a first configuration message to the first relay node, wherein the first configuration message is used for the transmission of an F1AP message with the second relay node.
In step S720_a (step S720_r), the donor node receives a third configuration message from the first relay node.
In step S730_a (step S730_r), the donor node sends a fourth configuration message to the first relay node.

The first configuration message, the third configuration message and the fourth configuration message in the above procedure correspond to the first configuration message, the third configuration message, and the fourth configuration message in the related operation on the first relay node respectively, and the descriptions of them will not repeated here.

In addition, the central unit of the donor node will trigger signaling interaction procedures of the SRB or the Backhaul Link channel for transmitting MT's F1AP, in response to receiving the message including the indication information from the first relay node.

To help understand the embodiments of the present disclosure, in FIG.7, as examples of the first configuration message, UE CONTEXT SETUP REQUEST and UE CONTEXT SETUP RESPONSE are described. In the same way, as examples of the second configuration message, UE CONTEXT MODIFICATION REQUEST, UE CONTEXT MODIFICATION RESPONSE are described. However, the embodiments are not limited to the above examples.

In addition to the examples described above, it is also understood that other messages defined in the standard (e.g., 3GPP TS 38.473) include the above-described information (e.g., indication information, identification information), as an embodiment of the present disclosure. At least one of GNB-DU CONFIGURATION UPDATE, GNB-CU CONFIGURATION UPDATE, UE CONTEXT RELEASE COMMAND, UE CONTEXT MODIFICATION REQUIRED, WRITE-REPLACE WARNING REQUEST, PWS CANCEL REQUEST, GNB-DU RESOURCE COORDINATION REQUEST, GNB-DU CONFIGURATION UPDATE ACKNOWLEDGE, GNB-CU CONFIGURATION UPDATE ACKNOWLEDGE, UE CONTEXT RELEASE COMPLETE, UE CONTEXT MODIFICATION CONFIRM, WRITE-REPLACE WARNING RESPONSE, PWS CANCEL RESPONSE, GNB-DU RESOURCE COORDINATION RESPONSE can be reused. In one embodiment, the relay node 1 transmits UE CONTEXT MODIFICATION REQUIRED message including the above information in the third configuration message. The donor node (CU) transmits UE CONTEXT MODIFICATION CONFIRM message including the above information in the fourth configuration message. In this embodiment, the first configuration message can be omitted

Furthermore, in some embodiments regarding in case of failure, the third configuration message can be UE CONTEXT SETUP FAILURE or UE CONTEXT MODIFICATION FAILURE. In case of using DU-initiated message, the fourth configuration message can be UE CONTEXT MODIFICATION REFUSE.

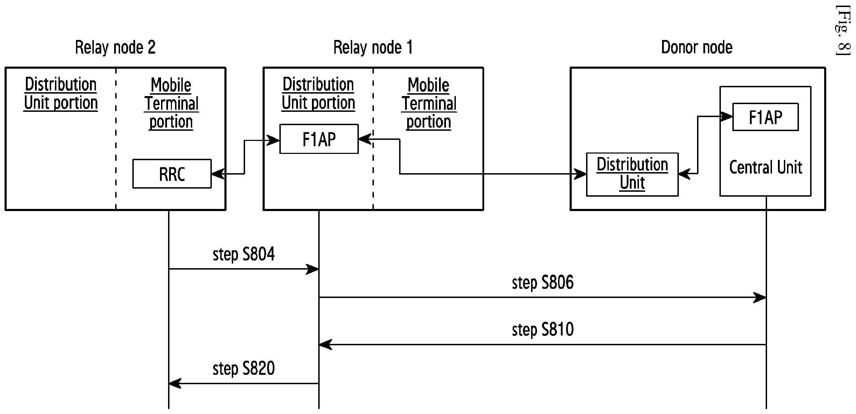

Referring to FIG. 8, a configuration method according to another embodiment of the present application includes:
Step S810, the central unit of the donor node sends a first configuration message (such as a DL RRC message transmission message) to the distribution unit of relay node 1, and the first configuration message includes one of the following information:
1) Identification information of relay node 2, such as identification information of the mobile terminal of relay node 2.
2) Configuration information generated by the central unit of the donor node for configuring the mobile terminal portion of relay node 2, such as an RRCReconfiguration message (see 3GPP TS 38.331). In addition, the configuration information further includes at least one of the following information:
   2.1) Indication information of one or more PDCP entities corresponding to the RLC entity.
   2.2) Configuration information of the Adapt protocol layer, which is used to configure the information added for the data packet by the Adapt protocol layer, such as the identification information of the relay node (in one embodiment, the relay node indicated by the identification information is the relay node at which the RRC layer and/or the distribution unit processing the data packet is located), the identification information of the SRB, the identification information of the logical channel, etc.
3) Indication information on whether there is an Adapt protocol layer. If there is an Adapt protocol layer, it means that it is required to add the Adapt protocol layer header to the data packet from the upper layer (such as the PDCP layer or the RLC layer), and it is required to read the content of the Adapt protocol layer in the data packet from the lower layer (such as the RLC layer or the MAC layer), and remove the Adapt protocol layer header. Further, it may also indicate that the identification information of the relay node (such as an ID of the relay node, an ID of the distribution unit of the relay node, and an ID of the mobile terminal of the relay node, and an identification of the cell to which the mobile terminal portion of the relay node accesses, etc.) at which the RRC layer and/or the distribution unit processing the data packet is located be added.
4) Identification information of the SRB used for carrying the data packet to which the Adapt protocol layer needs to be added.
5) Identification information of the logical channel used for carrying the data packet to which the Adapt protocol layer needs to be added.
6) Identification information of the SRB used for carrying the data packet from which the Adapt protocol layer needs to be read.
7) Identification information of the logical channel used for carrying the data packet from which the Adapt protocol layer needs to be read.

Step S820, the distribution unit of relay node 1 sends the configuration information generated by the central unit of the donor node for configuring the mobile terminal portion of relay node 2 among the first configuration message to the mobile terminal portion of relay node 2.

In addition, prior to step S810, step S804 is optionally included: the mobile terminal portion of relay node 2 transmits the indication information to the distribution unit portion of relay node 1; and step S806: the distribution unit portion of relay node 1 takes the indication information to be included in the message and sends it to the central unit of the donor node; or alternatively, step S806 is optionally included: the distribution unit portion of relay node 1 takes the indication information to be included in the message and sends it to the central unit of the donor node. The indication information includes at least one of the following information:
1) Identification information of the relay node 2, such as the identification information of the mobile terminal portion of relay node 2, the identification information of the distribution unit portion of relay node 2, and an identification of relay node 2.
2) Indication information on successful configuration of relay node 2 by OAM.
3) Indication information on the distribution unit portion of relay node 2 being able to work.
4) Indication information on that the distribution unit of relay node 2 needs to establish an F1 interface.
5) Indication information indicating that the node sending this indication message is a relay node.

The central unit of the donor node will trigger steps S810 and S820 described above for configuring the SRB or the Backhaul Link channel used to transmit MT's F1AP, after receiving the above indication information.

One embodiment of the above procedures may be used to configure the procedures in which MT's F1AP and MT's RRC adopt the same Backhaul Link channel and are transmitted between relay node 1 and relay node 2.

The effect of this scheme is to configure one relay node to transmit control signaling with another relay node through an interaction of the configuration messages between the donor node and the relay node.

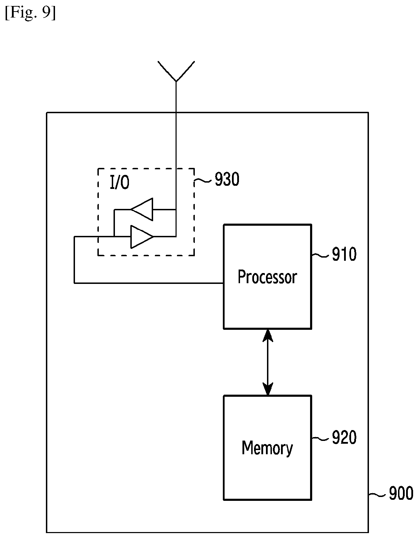

FIG. 9 schematically illustrates a block diagram of a device 900 according to an embodiment of the present application. The device 900 can be a communication node for performing operations in the above embodiments.

Referring to FIG. 9, device 900 includes a processor 910, such as a Digital Signal Processor (DSP). Processor 910 may be a single unit or a plurality of units to perform different actions according to embodiments of the present application. Device 900 may also include an input/output (I/O) unit 930 for receiving/transmitting signals from/to other entities. Although one processor is shown in FIG. 9, embodiments of the present disclosure may include one or more processors, depending on the capabilities of the communication node.

In addition, device 900 includes a memory 920. The memory 920 stores a basic program, an application, and data such as setting information for the operation of the device 900. The memory 920 may include volatile memory, non-volatile memory, or a combination of volatile memory and non-volatile memory. The memory 920 provides stored data in response to a request from the processor 910. The memory 920 may be in the form of a non-volatile or volatile memory, such as an Electrically Erasable Programmable Read Only Memory (EEPROM), a flash memory, etc. Memory 920 stores computer readable instructions, which when executed by processor 910 causes the processor to perform methods according to embodiments of the present application.

Although not shown in FIG. 9, the device 900 may further include a communication unit. In some embodiments, the device node 900 correspond to IAB node comprising DU portion and MT portion. The communication unit can transmit signals to other IAB node, UE, or IAB-donor. The communication unit can receive signals from other IAB node, UE, or lAB-donor. In some embodiments, the device nod 900 correspond to DU of IAB-donor. The communication unit can transmit signals to other IAB node or CU of IAB-donor. The communication unit comprises F 1 interface unit. In some embodiments, the device nod 900 correspond to CU of IAB-donor. The communication unit can transmit signals to DU of IAB-donor. The communication unit comprises F 1 interface unit.

Those skilled in the art will appreciate that above-mentioned methods are merely exemplary, and the methods of the present application are not limited to the steps and the sequences described above. The above device may include more modules, such as modules that have been developed or to be developed in the future for base stations or UEs and the like may also be included. The above-mentioned identifications are merely exemplary but not limiting, and the present application is not limited to these specific cells which are examples of such identifications. Many changes and modifications can be made by those skilled in the art in light of the teachings of the illustrated embodiments.

It should be understood that the above-mentioned embodiments of the present application can be implemented by software, hardware, or a combination of both software and hardware. For instance, various components within the device in the above embodiments may be implemented by various devices including, but not limited to, analog circuit devices, digital circuit devices, digital signal processing circuits, programmable processors, Application Specific Integrated Circuits (ASIC), Field Programmable Gate Arrays (FPGA), Programmable Logic Devices (CPLD), etc.

In the present application, "base station" refers to a mobile communication data and control switching center having a relatively large transmission power and a relatively wide coverage area, with functions of resource allocation scheduling, data reception and transmission, etc. "User equipment" refers to a user mobile terminal, for instance, including a terminal equipment such as a mobile phone, a notebook, etc., which can perform wireless communication with a base station or a micro base station.

Moreover, embodiments of the present application disclosed herein can be implemented on a computer program product. More specifically, the computer program product is a product having a computer readable medium encoded with computer program logic, which when executed on a computing device, provides related operations to implement the above technical solutions of the present application. When executed on at least one processor of a computing system, the computer program logic causes the processor to perform the operations (methods) described in the present application. Such a configuration of the present application is typically provided as software, code, and/or other data structures arranged or encoded on a computer readable medium such as an optical medium (such as CD-ROM), a floppy disk, or a hard disk, or other mediums such as firmware or microcode on one or more ROM or RAM or PROM chips, or downloadable software images, shared databases in one or more modules, etc. Software or firmware or such a configuration may be installed on the computing device such that one or more processors in the computing device perform the technical solutions described in embodiments of the present application.

## Claims

1. A method performed by a first integrated access and backhaul, IAB, node for a distributed unit, DU, in a communication system, the method comprising:
receiving a request message from a central unit, CU, of a donor node, the request message including:
identification information for one or more backhaul link channels to be established, and
indication information for indicating a type of information carried over each backhaul link channel of the one or more backhaul link channels to be established; and
transmitting a response message to the CU of the donor node, the response message including at least one of:
identification information for one or more backhaul link channels that are accepted to be established; or
identification information for one or more backhaul link channels that are not accepted to be established,
wherein each backhaul link channel corresponds to a channel for a radio link control, RLC, layer used for a backhaul link between the first IAB node and a second IAB node that is different from the first IAB node.

2. The method of claim 1, wherein the type of information is one of types including a user equipment, UE, associated F1 application protocol, FLAP, signaling or a non-UE associated FLAP signaling.

3. The method of claim 1,
wherein the request message comprises a user equipment, UE, context setup request message or a UE context modification request message, and
wherein the response message comprises a UE context setup response message or a UE context modification response message.

4. The method of claim 1,
wherein the request message further includes information of an adaptation protocol layer for an IAB node,
wherein the adaptation protocol layer is placed on top of the RLC layer, and
wherein the adaptation protocol layer is used to support a routing between IAB nodes.

5. The method of claim 1,
wherein the response message includes cell group configuration information, and
wherein the response message includes indication information of a priority of a backhaul link channel, used for setting a priority of a logical channel corresponding to the backhaul link channel.

6. The method of claim 1,
receiving, a downlink, DL, radio resource control, RRC, message transfer message from the CU of the donor node, the DL RRC message transfer message comprising RRC reconfiguration message; and
transmitting the RRC reconfiguration message to the second IAB node.

7. The method of claim 1, wherein the DU of the first IAB node correspond to a DU of the donor node.

8. A method performed by a central unit, CU, of a donor node in a communication system, the CU comprising:
transmitting a request message to a first integrated access and backhaul, IAB, node for a distributed unit, DU, the request message including:
identification information for one or more backhaul link channels to be established; and
indication information for indicating a type of information carried over each backhaul link channel of the one or more backhaul link channels to be established; and
receiving, from the first IAN node, the response message including at least one of:
identification information for one or more backhaul link channels that are accepted to be established; or
identification information for one or more backhaul link channels that are not accepted to be established,
wherein each backhaul link channel corresponds to a channel for a radio link control, RLC, layer used for a backhaul link between the first IAB node and a second IAB node that is different from the first IAB node.

9. The method of claim 8, wherein the type of information is one of types including a user equipment, UE, associated F1 application protocol, FLAP, signaling or a non-UE associated FLAP signaling.

10. The method of claim 8,
wherein the request message comprises a user equipment, UE, context setup request message or a UE context modification request message, and
wherein the response message comprises a UE context setup response message or a UE context modification response message.

11. The method of claim 8,
wherein the response message includes cell group configuration information, and
wherein the response message includes indication information of a priority of a backhaul link channel, used for setting a priority of a logical channel corresponding to the backhaul link channel.

12. A first integrated access and backhaul, IAB, node for a distributed unit, DU, in a communication system, the first IAB node comprising:
at least one transceiver; and
at least one processor operably coupled to the at least one transceiver, configured to perform one of method 1 to 7.

13. A central unit, CU, for use in a donor node in a communication system, the CU comprising:
at least one transceiver; and
at least one processor operably coupled to the at least one transceiver, configured to perform one of method 8 to 12.

## Patentansprüche

1. Verfahren, das von einem ersten integrierten Zugangs- und Backhaul-Knoten, IAB, für eine verteilte Einheit, DU, in einem Kommunikationssystem durchgeführt wird, wobei das Verfahren umfasst:
Empfangen einer Anforderungsnachricht von einer zentralen Einheit, CU, eines Spenderknotens, wobei die Anforderungsnachricht Folgendes enthält:
Identifikationsinformationen für einen oder mehrere einzurichtende Backhaul-Verbindungskanäle und
Anzeigeinformationen zum Anzeigen einer Art von Informationen, die über jeden Backhaul-Verbindungskanal des einen oder der mehreren einzurichtenden Backhaul-Verbindungskanäle übertragen werden; und
Übertragen einer Antwortnachricht an die CU des Spenderknotens, wobei die Antwortnachricht mindestens eines von Folgendem enthält:
Identifizierungsinformationen für einen oder mehrere Backhaul-Verbindungskanäle, deren Einrichtung akzeptiert wird; oder
Identifizierungsinformationen für einen oder mehrere Backhaul-Verbindungskanäle, deren Einrichtung nicht akzeptiert wird,
wobei jeder Backhaul-Verbindungskanal einem Kanal für eine Funkverbindungssteuerungs-, RLC,-Schicht entspricht, die für eine Backhaul-Verbindung zwischen dem ersten IAB-Knoten und einem zweiten IAB-Knoten verwendet wird, der sich von dem ersten IAB-Knoten unterscheidet.

2. Verfahren nach Anspruch 1, wobei die Art von Informationen eine der Arten ist, die eine Benutzergerät-, UE,-zugehörige F1-Anwendungsprotokoll-, FlAP,-Signalisierung oder eine nicht-UEzugehörige FlAP-Signalisierung enthält.

3. Verfahren nach Anspruch 1,
wobei die Anforderungsnachricht eine Benutzergerät-, UE-, Kontexteinrichtungsanforderungsnachricht oder eine UE-Kontextänderungsanforderungsnachricht umfasst, und
wobei die Antwortnachricht eine UE-Kontext-Einrichtungsantwortnachricht oder eine UE-Kontextänderungsantwortnachricht umfasst.

4. Verfahren nach Anspruch 1,
wobei die Anforderungsnachricht ferner Informationen über eine Anpassungsprotokollschicht für einen IAB-Knoten enthält,
wobei die Anpassungsprotokollschicht auf der RLC-Schicht angeordnet ist, und
wobei die Anpassungsprotokollschicht verwendet wird, um ein Routing zwischen IAB-Knoten zu unterstützen.

5. Verfahren nach Anspruch 1,
wobei die Antwortnachricht Zellgruppenkonfigurationsinformationen enthält, und
wobei die Anzeigenachricht Anzeigeinformationen einer Priorität eines Backhaul-Verbindungskanals enthält, die zum Festlegen einer Priorität eines logischen Kanals, der dem Backhaul-Verbindungskanal entspricht, verwendet wird.

6. Verfahren nach Anspruch 1,
Empfangen einer Downlink-, DL,-Funkressourcensteuerungs-, RRC,-Nachrichtenübertragungsnachricht von der CU des Spenderknotens, wobei die DL-RRC-Nachrichtenübertragungsnachricht eine RRC-Rekonfigurationsnachricht umfasst; und
Übertragen der RRC-Rekonfigurationsnachricht an den zweiten IAB-Knoten.

7. Verfahren nach Anspruch 1, wobei die DU des ersten IAB-Knotens einer DU des Spenderknotens entspricht.

8. Verfahren, das von einer Zentraleinheit, CU, eines Spenderknotens in einem Kommunikationssystem durchgeführt wird, wobei die CU umfasst:
Übertragen einer Anforderungsnachricht an einen ersten integrierten Zugangs- und Backhaul-, IAB-Knoten für eine verteilte Einheit, DU, wobei die Anforderungsnachricht Folgendes enthält:
Identifizierungsinformationen für einen oder mehrere einzurichtende Backhaul-Verbindungskanäle; und
Anzeigeinformationen zum Anzeigen einer Art von Informationen, die über jeden Backhaul-Verbindungskanal des einen oder der mehreren einzurichtenden Backhaul-Verbindungskanäle übertragen werden; und
Empfangen der Antwortnachricht von dem ersten IAN-Knoten, die mindestens eines von Folgendem enthält:
Identifizierungsinformationen für einen oder mehrere Backhaul-Verbindungskanäle, deren Einrichtung akzeptiert wird; oder
Identifizierungsinformationen für einen oder mehrere Backhaul-Verbindungskanäle, deren Einrichtung nicht akzeptiert wird,
wobei jeder Backhaul-Verbindungskanal einem Kanal für eine Funkverbindungssteuerungs-, RLC,-Schicht entspricht, die für eine Backhaul-Verbindung zwischen dem ersten IAB-Knoten und einem zweiten IAB-Knoten verwendet wird, der sich von dem ersten IAB-Knoten unterscheidet.

9. Verfahren nach Anspruch 8, wobei die Art von Informationen eine der Arten ist, die eine Benutzergerät-, UE,-zugehörige F1-Anwendungsprotokoll-, FlAP,-Signalisierung oder eine nicht-UEzugehörige FlAP-Signalisierung enthält.

10. Verfahren nach Anspruch 8,
wobei die Anforderungsnachricht eine Benutzergerät-, UE-, Kontexteinrichtungsanforderungsnachricht oder eine UE-Kontextänderungsanforderungsnachricht umfasst, und
wobei die Antwortnachricht eine UE-Kontext-Einrichtungsantwortnachricht oder eine UE-Kontextänderungsantwortnachricht umfasst.

11. Verfahren nach Anspruch 8,
wobei die Antwortnachricht Zellgruppenkonfigurationsinformationen enthält, und
wobei die Antwortnachricht Anzeigeinformationen einer Priorität eines Backhaul-Verbindungskanals enthält, die zum Festlegen einer Priorität eines logischen Kanals, der dem Backhaul-Verbindungskanal entspricht, verwendet wird.

12. Erster integrierter Zugangs- und Backhaul-Knoten, IAB, für eine verteilte Einheit, DU, in einem Kommunikationssystem, wobei der erste IAB-Knoten umfasst:
mindestens einen Transceiver; und
mindestens einen mit dem mindestens einen Transceiver betriebsfähig gekoppelten Prozessor, der konfiguriert ist, um eines des Verfahrens 1 bis 7 umzusetzen.

13. Zentrale Einheit, CU, zur Verwendung in einem Spenderknoten in einem Kommunikationssystem, wobei die CU umfasst:
mindestens einen Transceiver; und
mindestens einen mit dem mindestens einen Transceiver betriebsfähig gekoppelten Prozessor, der konfiguriert ist, um eines des Verfahrens 8 bis 12 umzusetzen.

## Revendications

1. Procédé exécuté par un premier noeud d'accès et de liaison terrestre intégrés, IAB, pour une unité distribuée, DU, dans un système de communication, le procédé comprenant :
recevoir un message de demande d'une unité centrale, CU, d'un noeud donneur, le message de demande comprenant :
des informations d'identification pour un ou plusieurs canaux de liaison terrestre à établir, et
des informations d'indication pour indiquer un type d'informations transportées sur chaque canal de liaison terrestre de l'un ou des plusieurs canaux de liaison terrestre à établir ; et transmettre un message de réponse à la CU du noeud donneur, le message de réponse comprenant au moins un de ce qui suit :
des informations d'identification pour un ou plusieurs canaux de liaison terrestre dont l'établissement est accepté ; ou
des informations d'identification pour un ou plusieurs canaux de liaison terrestre dont l'établissement n'est pas accepté,
dans lequel chaque canal de liaison terrestre correspond à un canal pour une couche de commande de liaison radio, RLC, utilisée pour une liaison terrestre entre le premier noeud IAB et un deuxième noeud IAB qui est différent du premier noeud IAB.

2. Procédé de la revendication 1, dans lequel le type d'informations est l'un des types comprenant une signalisation de protocole d'application F1, FLAP, associée à un équipement utilisateur, UE, ou une signalisation F1AP non associé à un UE.

3. Procédé de la revendication 1,
dans lequel le message de demande comprend un message de demande de configuration de contexte d'équipement utilisateur, UE, ou un message de demande de modification de contexte d'UE, et
dans lequel le message de réponse comprend un message de réponse de configuration de contexte d'UE ou un message de réponse de modification de contexte d'UE.

4. Procédé de la revendication 1,
dans lequel le message de demande comprend en outre des informations sur une couche de protocole d'adaptation pour un noeud IAB,
dans lequel la couche de protocole d'adaptation est placée au-dessus de la couche RLC, et
dans lequel la couche de protocole d'adaptation est utilisée pour prendre en charge le routage entre des noeuds IAB.

5. Procédé de la revendication 1,
dans lequel le message de réponse comprend des informations de configuration de cellule, et
dans lequel le message de réponse comprend des informations d'indication sur une priorité d'un canal de liaison terrestre, utilisée pour définir une priorité d'un canal logique correspondant au canal de liaison terrestre.

6. Procédé de la revendication 1,
recevoir un message de transfert de message de commande de ressources radio, RRC, de liaison descendante, DL, provenant de la CU du noeud donneur, le message de transfert de message RRC DL comprenant un message de reconfiguration RRC ; et
transmettre le message de reconfiguration RRC au deuxième noeud IAB.

7. Procédé de la revendication 1, dans lequel la DU du premier noeud IAB correspond à une DU du noeud donneur.

8. Procédé exécuté par une unité centrale, CU, d'un noeud donneur dans un système de communication, la CU comprenant :
transmettre un message de demande à un premier noeud d'accès et de liaison terrestre intégrés, IAB,
pour une unité distribuée, DU, le message de demande comprenant :
des informations d'identification pour un ou plusieurs canaux de liaison terrestre à établir ; et
des informations d'indication pour indiquer un type d'informations transportées sur chaque canal de liaison terrestre de l'un ou des plusieurs canaux de liaison terrestre à établir ; et recevoir, en provenance du premier noeud IAN, le message de réponse comprenant au moins un de ce qui suit :
des informations d'identification pour un ou plusieurs canaux de liaison terrestre dont l'établissement est accepté ; ou
des informations d'identification pour un ou plusieurs canaux de liaison terrestre dont l'établissement n'est pas accepté,
dans lequel chaque canal de liaison terrestre correspond à un canal pour une couche de commande de liaison radio, RLC, utilisée pour une liaison terrestre entre le premier noeud IAB et un deuxième noeud IAB qui est différent du premier noeud IAB.

9. Procédé de la revendication 8, dans lequel le type d'informations est l'un des types comprenant une signalisation de protocole d'application F1, FLAP, associée à un équipement utilisateur, UE, ou une signalisation F1AP non associé à un UE.

10. Procédé de la revendication 8,
dans lequel le message de demande comprend un message de demande de configuration de contexte d'équipement utilisateur, UE, ou un message de demande de modification de contexte d'UE, et
dans lequel le message de réponse comprend un message de réponse de configuration de contexte d'UE ou un message de réponse de modification de contexte d'UE.

11. Procédé de la revendication 8,
dans lequel le message de réponse comprend des informations de configuration de cellule, et
dans lequel le message de réponse comprend des informations d'indication sur une priorité d'un canal de liaison terrestre, utilisée pour définir une priorité d'un canal logique correspondant au canal de liaison terrestre.

12. Premier noeud d'accès et de liaison terrestre intégrés, IAB, pour une unité distribuée, DU, dans un système de communication, le premier noeud IAB comprenant :
au moins un émetteur-récepteur ; et
au moins un processeur couplé à l'au moins un émetteur-récepteur, configuré pour mettre en oeuvre l'un du procédé 1 à 7.

13. Unité centrale, CU, destinée à être utilisée dans un noeud donneur d'un système de communication, la CU comprenant :
au moins un émetteur-récepteur ; et
au moins un processeur couplé à l'au moins un émetteur-récepteur, configuré pour mettre en oeuvre l'un du procédé 8 à 12.
